## Europäisches Patentamt
## European Patent Office
## Office européen des brevets

(11) Numéro de publication: **0 287 432**
A1

# (12) DEMANDE DE BREVET EUROPEEN

(21) Numéro de dépôt: 88400823.6

(22) Date de dépôt: 06.04.88

(51) Int. Cl.⁴: **A 01 K 61/00**
G 01 G 13/00, G 01 G 17/08

(30) Priorité: 06.04.87 FR 8704816
07.03.88 FR 8802855

(43) Date de publication de la demande:
19.10.88 Bulletin 88/42

(84) Etats contractants désignés:
AT BE CH DE ES FR GB GR IT LI LU NL SE

(71) Demandeur: **SOCIETE M A C S E**
**1, Allée du Pré Mignot B.P. 6**
**F-78630 Orgeval (FR)**

(72) Inventeur: **Berthe, Philippe**
**17, ruelle des Bergeries**
**F-78440 Guitrancourt (FR)**

(54) **Dispositif de pesage par lots de poissons vifs en élevage piscicole, notamment pendant leur transfert hors de bassin.**

(57) La présente invention concerne un dispositif de pesage par lots de poissons vifs en élevage piscicole, notamment pendant leur transfert hors de bassin.

Ce dispositif est constitué d'un bâti (1) supportant par l'intermédiaire de moyeux (11), de supports élastiques (12) et d'un peson (13) un tambour (2) ajouré en sa périphérie et séparé par une tôle médiane (5) en deux parties égales (4), chacune étant munie d'une ouverture (6).

En amont et régulant l'arrivée des poissons dans le dit tambour se trouve une grille (21) séparant les poissons de l'eau et un système de plaques articulées (23) et (24) l'une à l'autre par l'une de leurs extremités (26), l'une d'entre elles (23) étant articulée au bâti par son autre extrémité (26).

En aval, une trémie (18) reçoit les poissons du tambour et l'eau recyclée par la grille (21).

Une partie électronique (14) recevant ses informations du peson (13) et des capteurs de position du tambour et des plaques assure la commande du moteur et de son embrayage faisant effectuer au tambour une demie rotation à chaque cycle de pesage.

FIG 1

EP 0 287 432 A1

# Description

La présente invention a trait à une machine permettant le pesage par lots de poissons vifs.

Son domaine d'application se trouve principalement dans les élevages piscicoles où il devient impératif de pouvoir mieux connaître le poids de poissons contenus dans chaque bassin afin d'optimiser leur remplissage, la distribution des aliments et des traitements. Ces opérations, devant s'effectuer en fonction du pourcentage de poids de poissons contenus dans chaque bassin, sont en fait réalisées jusqu'à ce moment par estimation de ce poids donc, de façon très approximative.

Il est de règle, en élevage piscicole, de trier les poissons provenant d'un même bassin toutes les trois ou quatre semaines afin de séparer les éléments ayant plus profité de l'alimentation que d'autres.

L'opération consiste à prélever tous les poissons d'un même bassin à l'aide d'une pompe et à les redistribuer suivant leurs tailles dans d'autres bassins précédemment vidés. Ce triage s'effectue au moyen d'une machine à rouleaux ou à bandes, séparant, au choix de l'éleveur, les poissons en deux, trois ou quatre groupes, harmonisant ainsi la population des bassins, mais sans avoir connaissance du poids total des poissons redistribués dans chaque bassin.

Une des améliorations à apporter à cette opération de triage serait donc de pouvoir peser les poissons entre leur sortie du trieur et leur remise dans chaque bassin.

A cet effet, différents essais ont été effectués à ce jour, les uns ayant pour but de peser les poissons, les autres de les compter. A notre connaissance, aucun de ces matériels n'a une bonne précision par la faute de phénomène de rebonds dans les installations de comptage ou de problème de trappe d'obturation blessant les poissons et de vibrations dans les installations de pesage.

Face à ces difficultés, le demandeur a mené des recherches aboutissant à une machine de pesage ne présentant pas ces inconvénients et s'intégrant parfaitement à la cinématique de pesage.

Ce dispositif de pesage est constitué d'un bâti rigide supportant, par l'intermédiaire de supports élastiques et d'un peson, un tambour ajouré en sa périphérie et séparé en deux parties égales par une tôle médiane. Chacune de ces deux parties étant munie d'une ouverture servira, à tour de rôle, de contenant de pesage aux lots de poissons suivant la position du tambour qui est animé d'un mouvement de rotation engendré par un moteur et son embrayage.

En amont et fixé sur le bâti, se trouve un ensemble relié à l'arrivée, en communication avec les bassins directement ou en sortie de trieur, permettant la régulation de l'arrivée des poissons dans le tambour. Cet ensemble est constitué d'un piège à eau séparant l'eau des poissons et d'un système de plaques articulées autorisant ou interdisant l'accès au tambour, suivant leur position.

En aval, une trémie de réception recevant les poissons à leur sortie du tambour et l'eau recyclée au niveau du piège à eau.

A titre d'illustration d'un mode de réalisation, des dessins sont joints:
- Les figures 1 et 2 sont des représentations de profil droit et gauche du dispositif suivant l'invention, selon un premier mode de réalisation.
- La figure 3 est une vue correspondante à la figure 1 selon un second mode de réalisation.
- Les figures 4 et 5 sont des représentations en perspectives détaillées de la partie amont de la machine, en position ouverte sur la figure 4, en position fermée sur la figure 5.
- La figure 6 est une vue correspondante aux figures 4 et 5 appliquée à la variante de la figure 3, la partie amont étant en position intermédiaire.

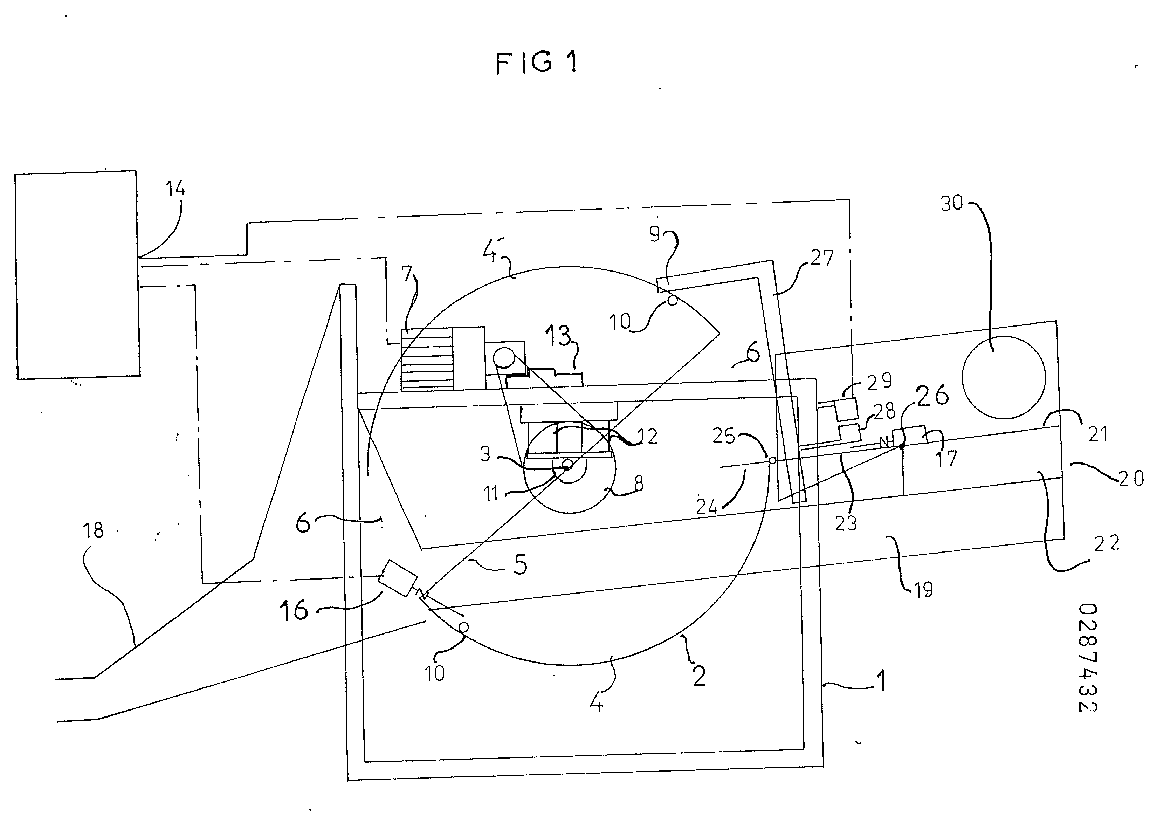

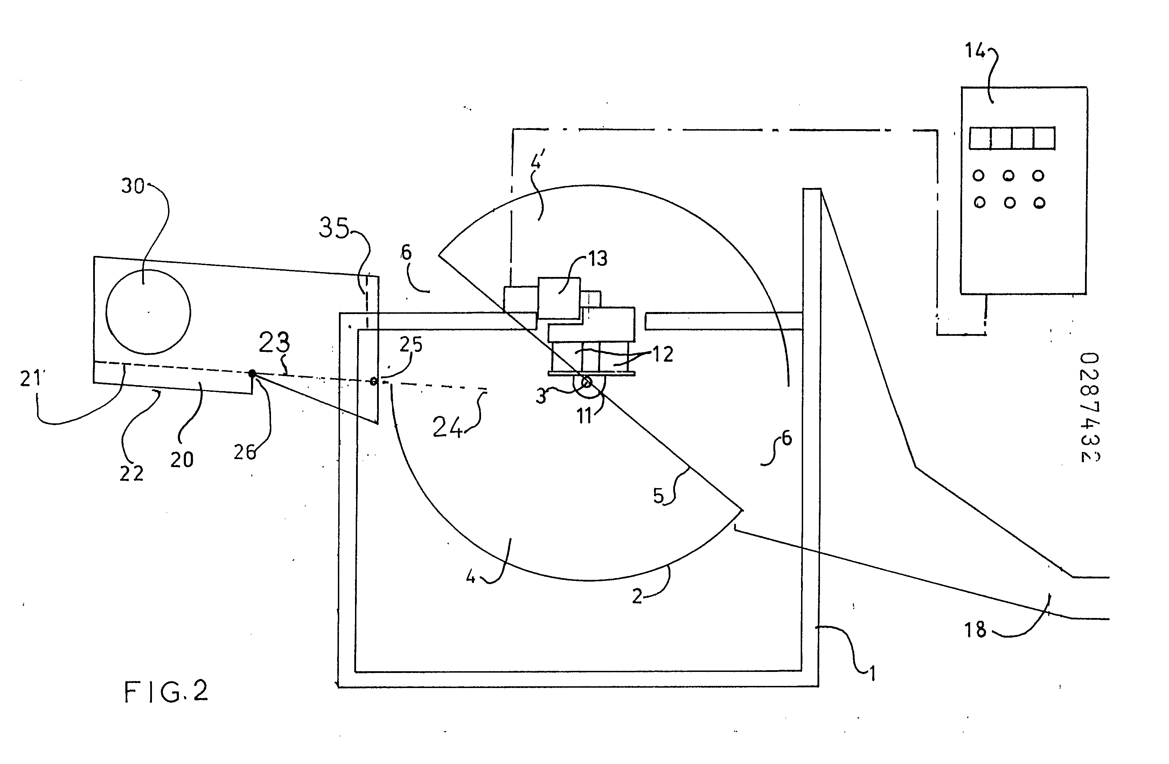

Suivant les figures 1 et 2 la machine est constituée :

- d'un bâti rigide (1), ensemble mécano-soudé servant à supporter les différents éléments du dispositif et ses capots ;
- d'un tambour en acier inoxydable ajouré (2) à sa périphérie, supporté au niveau de ses côtés par deux demi-arbres (3) alignés et disposés horizontalement, permettant sa rotation. Ce tambour est divisé en deux parties égales (4) et (4') selon un plan diamétral (5), chacune de ces parties étant munie d'une ouverture (6) s'étendant selon un arc sur toute la longueur du tambour (2), et disposées de façon adjacente d'un côté du plan (5) pour l'une, et de l'autre côté de façon diamétralement opposée pour l'autre ouverture.

Ces deux moitiés (4) et (4') de tambour ainsi définies servant chacune leur tour, en fonction de leur rotation, de contenant de pesage aux poissons.

- D'un mécanisme de motorisation composé d'un moteur (7) relié à un embrayage (8). Le moteur (7) relié à un embrayage (8) entraînant, par l'intermédiaire du dit embrayage, en rotation le tambour à chaque cycle de vidange ; l'embrayage accouplant le tambour au moteur pendant cette rotation et les désaccouplant pendant la phase de remplissage/pesage, rendant ainsi totalement libre le tambour afin d'assurer constamment, que soit confondu l'axe géométrique de l'élément de pesage et l'axe de charge et précise ; une permettant ainsi une pesée rapide et précise ; une butée d'arrêt de rotation (9) solidaire d'un bras (27) venant s'intercaler devant l'un des pions diamétralement opposés (10) prévus sur la périphérie du tambour (2) empêchant celui-ci de continuer sa rotation sous l'effet de l'inertie emmagasinée durant sa demie-rotation et du déséquilibre provoqué par chaque cycle de vidange ; le tambour se trouvant alors vide dans sa partie basse et plein dans sa partie haute. Le plan diamétral (5) formant alors un angle d'environ 45° par rapport à l'horizontale.

Toujours selon les figures 1 et 2 et des vues en perspectives détaillées 4 et 5, la machine est constituée :

- d'un système de piège à eau disposé en amont du tambour et composé principalement d'une grille (21) sur laquelle arrivent les poissons. L'eau, ayant véhiculé les poissons jusqu'ici, passe au travers de cette grille et est recueillie par un bac (22) placé en dessous d'elle. Ce bac (22) étant prolongé par le tuyau d'évacuation (19) permet le recyclage de l'eau ainsi récupérée vers la partie aval (18) de la machine.

Cette grille (21) étant amovible, ce piège à eau permet, une fois la grille retirée, le libre passage des poissons directement vers la partie aval (18) sans passer par le tambour en cas d'incident de fonctionnement de la machine, ou selon le souhait de l'opérateur.

Ce piège à eau a pour but, en séparant les poissons de l'eau, d'éviter l'influence de l'eau sur la pesée, mais ne permet pas de pouvoir conserver indéfiniment les poissons dans le tambour. Il a donc fallu, à l'inventeur, déterminer un temps maximum de séjour des poissons dans le tambour, appelé temporisation de sauvegarde ; temps qui sera décompté par la partie électronique pendant chaque phase de remplissage.

- D'un dispositif d'obturation composé de deux plaques (23) et (24) articulées l'une à l'autre par une charnière (25). La plaque (23) étant elle-même articulée à son autre extrémité par rapport au bâti par une autre charnière (26). Cet ensemble de plaques ayant la double fonction :

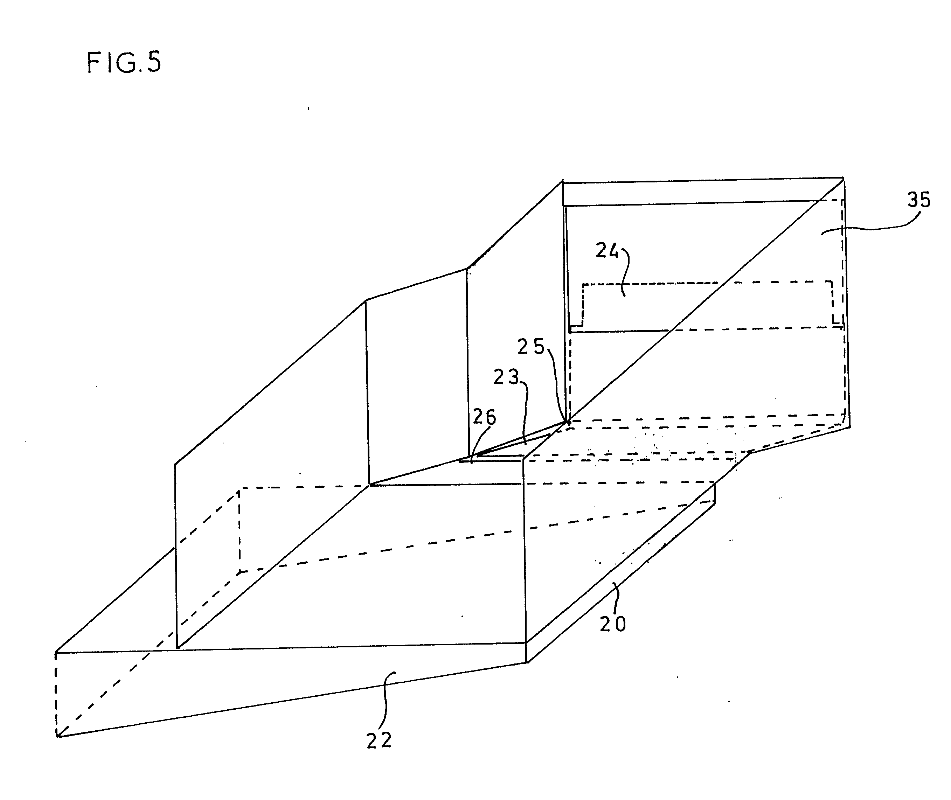

1) - De servir de réservoir d'attente aux poissons, leur interdisant ainsi, l'accès au tambour pendant la phase de prise de poids de la partie électronique et pendant la rotation du tambour. Elle est dite, alors, "fermée" (figure 5) ;

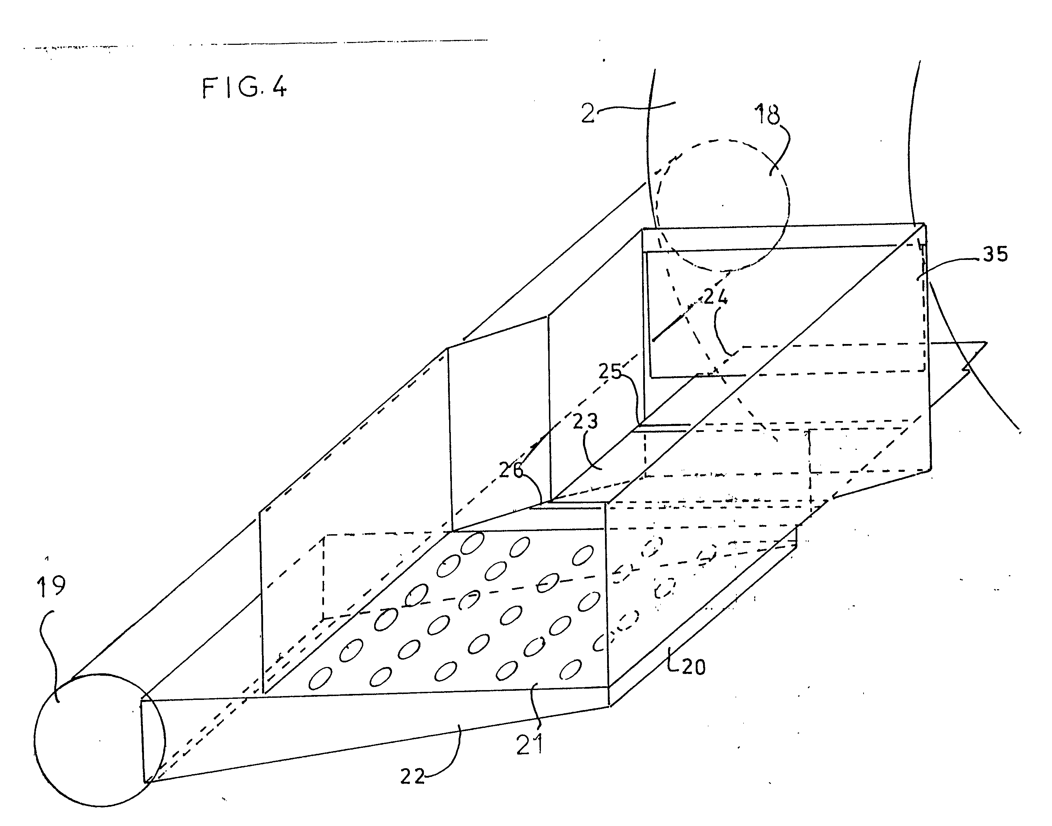

2) - De servir de plaque d'accès au tambour pendant la phase de remplissage. La plaque (24) est amenée dans l'ouverture (6) pour former une rampe de remplissage. Elle est dite, alors, "ouverte" (figure 4). Le mouvement de cet ensemble trappe, de la position fermée à la position ouverte, étant assuré par un des pions (10) du tambour (2) venant heurter le bras (27) solidaire de la plaque (23). Son maintien en position ouverte étant assuré par un électro-aimant (28 et 29) fixé pour une de ses parties (28) au bras (27) et pour l'autre partie (29) au bâti (1). La fermeture de ce dispositif étant assurée par une impulsion électrique au noyau de l'électro-aimant (28-29).

Ce dispositif d'obturation permettant donc de pouvoir s'ouvrir ou se fermer en présence de poissons sans, en aucun cas, pouvoir les blesser de quelque façon que ce soit.

- D'une liaison entre le tambour (2) et le bâti (1) composée de paliers (11) emmanchés sur chaque demi-arbre (3) assurant une bonne rotation du tambour, de supports élastiques (12) fixés, pour un côté du dispositif, entre la semelle du second palier et le bâti (figure 2), et pour l'autre coté, entre la semelle du second palier et un peson (13) lui-même fixé au bâti (1) ; cette liaison élastique filtrant les trépidations et oscillations parasites que le tambour pourrait transmettre au peson (13).

Cet élément de pesage pourra être un capteur de force, capteur de flexion, jauge de contrainte ou tout autre dispositif de pesage électronique transmettant ces informations à un coffret électronique de pesage (14).

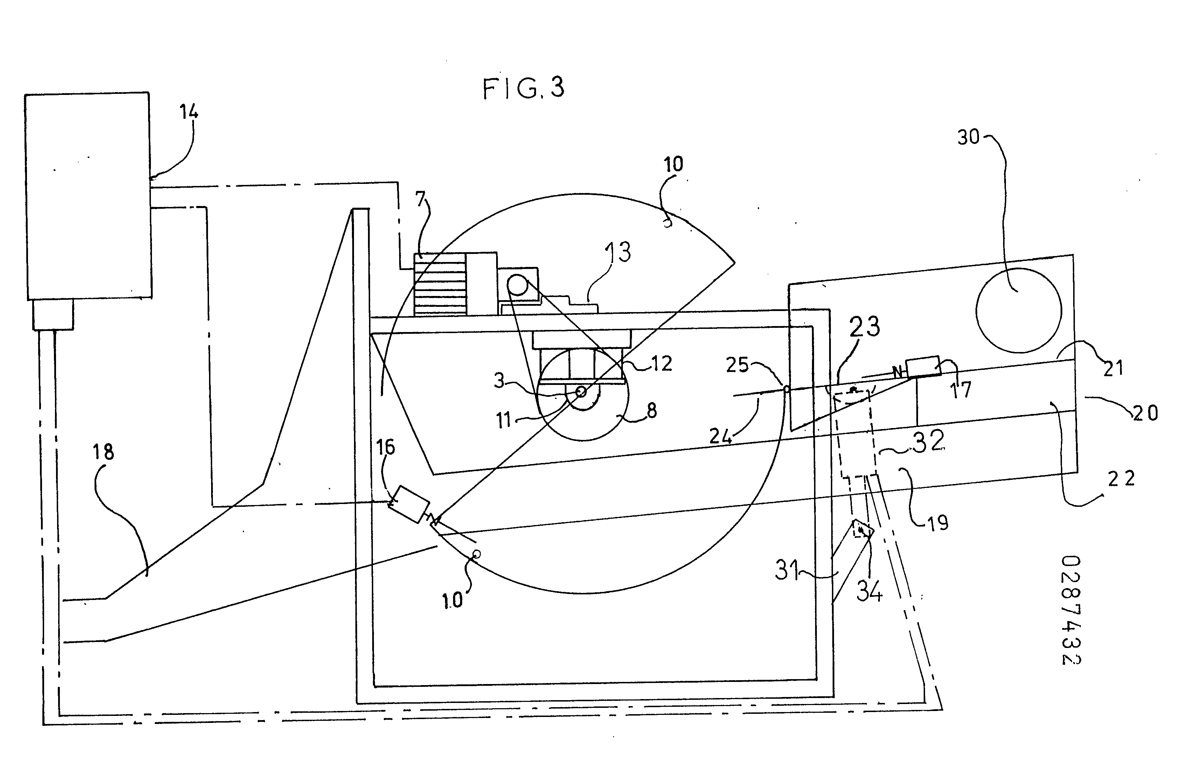

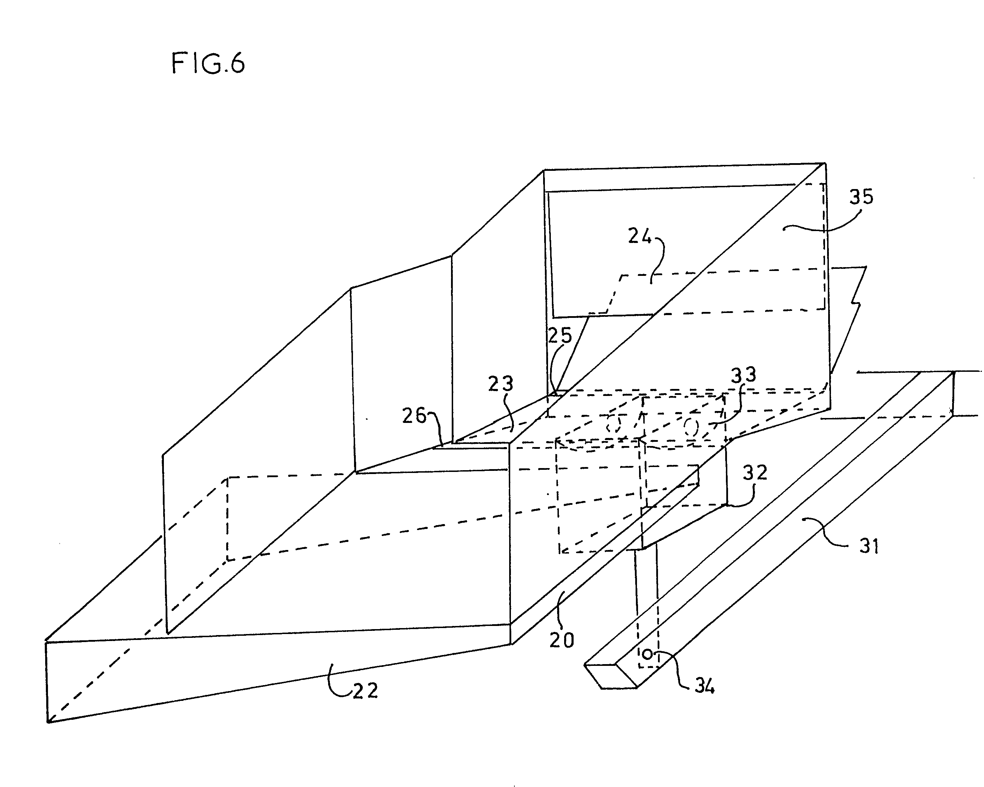

Selon un autre mode de réalisation et suivant les figures 3 et 6 il est apporté une variante au système de commande des plaques articulées ayant pour but d'apporter plus de souplesse à ce système notamment pour moduler la phase de descente des trappes (23 et 24). Ce système de commande comporte un vérin (32) fixé et articulé au bâti (1) sur un tirant (31) par un axe (34), d'une part, et, à la plaque (23) par une chappe double articulée (33) d'autre part. L'ensemble de ce dispositif est complété par une brosse (35) fixée en avant de la partie amont de la machine (20). Cette variante a pour but de pouvoir commander la descente du système de plaques en deux temps :

- une étape intermédiaire (figure 6) durant environ une seconde, entre la position ouverte (figure 4) et la position fermée (figure 5) pendant laquelle le vérin (32) maintient les plaques (23 et 24) en position semi-fermée permet aux poissons, se trouvant en équilibre à l'extrémité de la plaque (24) au moment du déclenchement du seuil, de pouvoir glisser vers la plaque (23). L'extrémité de la brosse (35) est alors en contact avec la plaque (24) empêchant ainsi toute avancée de poissons de la plaque (23) vers la plaque (24). Le mouvement de cet ensemble de plaques de la position fermée à la position ouverte étant assuré par le vérin (32) qui reçoit son impulsion de mouvement du coffret de commande (14) relié au capteur (16) lorsque l'un des pions (10) vient heurter ce capteur (16). Afin d'empêcher tout mouvement intempestif du tambour, une fois la position de remplissage / vidange atteinte, aucune butée d'anti-rotation n'étant prévue, selon ce mode de réalisation, la programmation du cycle de déroulement dans ce cas laisse accouplé le tambour au moteur par l'intermédiaire de l'embrayage pendant la phase de remplissage.

La commande de descente des plaques est déclenchée par l'obtention du seuil de pesage. Le maintien en position intermédiaire (figure 6) est obtenu par une pré-programmation du coffret (14)

- D'une partie électronique (14) pourvue :

En sa partie interne, d'un micro-processeur et de ses périphériques recevant les informations des différents capteurs de la machine :

Capteur de flexion (13) fixé, à l'une de ses extrémités, au bâti (1) et, pour l'autre extrémité, à l'un des deux demi-arbres (3) ou en variante à l'une des extrémités d'un arbre prévu traversant en vue d'améliorer la rigidité et de fiabiliser le pesage, par l'intermédiaire des supports élastiques (12) et du palier (11) ;

Capteur de fin de rotation du tambour (16) fixé sur le bâti et disposé de façon à recevoir ses informations de l'un des deux pions (10) situé à la périphérie extérieure d'un des flancs du tambour ;

Capteur (17) de bonne ouverture de la trappe (24) disposée sur l'un des côtés de la partie amont de la machine ; et fonction des informations reçues de ces 3 capteurs, gérant le processus de la machine, envoyant leurs ordres au moteur (7) et à son embrayage (8), soit à l'électro aimant (28-29) de commande du bras (27) soit au vérin (32).

En sa partie externe, d'un affichage lumineux, d'une imprimante et de différents boutons. Ces 3 éléments servant à fixer le mode de fonctionnement de la machine comme suit :

   - Le mode "étalonnage" du peson, le tambour étant vide et libre de toute contrainte ; ce mode permet d'effectuer la tare du tambour de façon à obtenir le zéro électrique de pesage et de régler le gain de la partie électronique de pesage ou, si ces opérations ont déjà été effectuées, de vérifier leur bonne stabilité.

Le mode "recherche" de seuil où l'opérateur va définir un seuil de pesée au moyen des boutons poussoirs et de l'affichage lumineux. Ce seuil sera pris en compte ultérieurement, en mode fonctionnement automatique, par le programme du micro-processeur.

- D'une partie de réception (18) formant l'aval de la machine, permettant de récupérer les poissons à leur sortie du tambour et recevant l'eau recyclée par le tuyau (19) provenant de la partie amont (20) de la machine alimentée par le conduit (30).

Déroulement d'un cycle :

Précédemment à la mise en fonctionnement, l'opérateur aura vérifié le zéro électrique de pesage et aura déterminé un seuil de pesée en fonction du débit de la sortie correspondante d'un trieur, et de la taille des poissons de façon à concilier un bon remplissage du tambour en un minimum de temps. Ces opérations effectuées, l'opérateur pourra passer en mode fonctionnement automatique ; la partie électronique pourra initialiser ses mémoires de calculs, puis enverra une impulsion électrique à l'électro-aimant (28) et (29) ou commandera le vérin (32) en deux temps, de façon à obtenir une étape intermédiaire (figure 6) pour fermer les trappes (23) et (24) et, enfin, fera effectuer au tambour (2) une demie rotation de façon à le vider de tout corps étranger ayant pu s'y introduire, jusqu'à ce que l'un des pions (10) vienne heurter le contact (16) de fin de rotation. Ce contact obtenu provoque aussitôt l'arrêt du moteur et le désaccouplement de l'embrayage dans le cas où les trappes (23 et 24) sont manoeuvrées par l'intermédiaire du bras (27) et de l'électro-aimant (28 et 29), dans ce cas le pion opposé à celui qui a effectué le contact de fin de rotation aura précédemment, dans sa course, heurté le bras (27), remontant ainsi, la trappe (23) et (24) en position ouverte (figure 4).

Dans le cas de commande des trappes (23 et 24) par le vérin (32), le système ne comportant alors plus de butée d'anti-rotation (9) il n'y a pas lieu de désaccoupler l'embrayage. Les poissons pénètrent alors dans la partie basse du tambour jusqu'à ce que, soit le seuil de pesée fixé par l'opérateur, soit la temporisation de sauvegarde de la partie électronique soient atteints. Au premier de ces deux termes atteints, la trappe constituée de plaques (23) et (24) va se refermer suivant les deux modes de réalisation, soit en une fois par envoi d'une impulsion électrique dans la bobine de l'électro-aimant (28 et 29) soit en deux temps par commande du vérin (32), interdisant aux poissons l'accès au tambour (2).

Après avoir attendu un certain temps une bonne stabilité du tambour, la partie électronique va effectuer plusieurs pesées du tambour et mémoriser ces dernières. Cette prise d'échantillons étant stockée, le tambour effectuera une demie rotation par l'intermédiaire du moteur (7) et de son embrayage (8) de façon à remonter le lot de poissons de la partie basse vers la partie haute. Celui-ci se retrouve donc sur le plan médian (5) dont l'inclinaison à 45° le force à s'évacuer.

Pendant cette demie rotation, l'un des pions (10) aura rencontré sur sa trajectoire le bras (27) ouvrant ainsi la trappe permettant aux poissons l'accès au tambour ou, dans le cas de commande des trappes (23 et 24) par le vérin (32) l'un des pions (10) aura rencontré dans sa course le capteur (16) donnant ainsi l'ordre au coffret (14) et à ses moyens d'actionnement de commander le vérin (32) afin d'ouvrir la trappe.

Pendant ces opérations mécaniques, la partie électronique aura traité les échantillons de poids de façon à en obtenir la moyenne qu'elle affichera et qu'elle additionnera aux autres moyennes pour en établir le total transmis, à chaque nouvelle pesée, à une imprimante.

## Revendications

1) - Dispositif pour peser par lots les poissons vifs lors de transfert hors de bassin de pisciculture, caractérisé en ce qu'il comporte un bâti (1) supportant un tambour (2) par l'intermédiaire de moyeux (11) emmanchés soit sur des demis-arbres (3) soit sur les extrémités d'un arbre traversant (3) et reliés au bâti (1) par des supports élastiques (12) et un capteur de force (13). Ce tambour (2), constitué en sa périphérie de tôle ajourée, est divisé en deux parties (4) et (4') par un plan médian (5) chacune de ces parties étant munie d'une ouverture (6) venant se présenter tour à tour à la partie (20) amont de la machine, grâce à un moteur (7) accouplé au tambour (2) par un embrayage (8) appliquant au dit tambour un mouvement de rotation commandé à partir d'un coffret électronique (14).

L'amenée des poissons dans le tambour hors des phases de pesée étant assurée par un piège à eau (21) et un système de plaques d'obturation (23) et (24) basculantes reliées à des moyens de commandes (27.28.29 et 32).

2) - Dispositif selon le revendication 1 caractérisé en ce qu'il comporte des capteurs respectivement de flexion (13), de fin de rotation du tambour (16) et de bonne ouverture des plaques d'obturation (17), reliés à une armoire électrique (14) avec micro processeur commandant le cycle de fonctionnement de la machine et l'alimentation du moteur et deson embrayage.

3) - Dispositif selon la revendication 1 caractérisé par le fait que les deux parties (4) et (4')

du tambour sont égales et que leurs ouvertures (6) disposées de façon diamétralement opposées s'étend, selon un arc, sur toute la longueur du tambour.

4) - Dispositif selon la revendication 1 caractérisé par le fait que le piège à eau (21) est prolongé par un dispositif composé de deux plaques (23) et (24) articulées l'une à l'autre par une charinière (25), l'une d'entre elles étant articulée au bâti (1) par une autre charnière (26).

Ce système de plaques empêchant l'arrivée des poissons pendant la phase de pesage et autorisant son introduction dans le tambour pendant la phase de remplissage.

5) - Dispositif selon les revendications 1 et 4 caractérisé par le fait que la plaque (23) est pourvue d'un bras (27) que vient heurter l'un des pions (10) disposé à la périphérie du tambour (2) et par le fait que sur le bras (27) est fixée la partie (28) d'un électro-aimant venant se caler à la contre-partie (29) du dit électro-aimant fixée au bâti (1) de façon à maintenir la trappe en position ouverte.

6)- Dispositif selon les revendications 1.2 et 4 caractérisé par le fait que les plaques (23 et 24) sont manoeuvrées par un vérin (32) relié, d'une part par une articulation (33) à la plaque (23) articulée au bâti (1), et, d'autre part, au bâti (1) par exemple par tirant (31) par l'intermédiaire d'une deuxième articulation (34). Ce vérin (32) est relié à des moyens d'actionnement commandés à partir du coffret électronique (14) qui reçoit ses informations d'une part du capteur de fin de course (16) sur lequel vient prendre appui un des pions (10) solidaire de la périphérie du tambour et, d'autre part, du capteur de flexion (13).

7) - Dispositif selon la revendication 6 caractérisé par une commande en deux temps des moyens d'actionnement du vérin (32) comportant un temps de pose intermédiaire de manière à maintenir les plaques (23) et (24) en position semi-fermée pendant un certain temps avant de se positionner en position fermée.

8) - Dispositif selon les revendications 6 et 7 caractérisé par la présence d'une brosse (35) fixée en avant de la partie amont de la machine venant en contact avec la plaque (24) faisant suite à celle articulée sur le bâti à partir de la phase intermédiaire d'arrêt jusqu'à la fermeture des plaques.

9) - Dispositif selon la revendication 1 caractérisé par le fait que le piège à eau situé en amont de la machine comporte une grille amovible (21).

10) - Dispositif selon la revendication 9 caractérisé par le fait que le piège à eau est pourvu d'un bac de recueillement de l'eau (22) disposé sous la grille (21) et prolongé par un tuyau d'évacuation (19) vers la partie aval (18) de la machine.

FIG 1

FIG.2

02874 32

FIG.3

0287432

FIG.4

2

18

35

24

25

23

26

19

20

21

22

0287432

FIG.5

35

24

25

23

26

20

22

0287432

FIG.6

0287432

Office européen des brevets

RAPPORT DE RECHERCHE EUROPEENNE

Numero de la demande

EP  88 40 0823

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | DE-A-3 234 285  (SCHNEIDER) --- | | A 01 K  61/00<br>G 01 G  13/00<br>G 01 G  17/08 |
| A | FR-A-1 024 845  (MILLIER) ----- | | |

DOMAINES TECHNIQUES RECHERCHES (Int. Cl.4)

A 01 K
G 01 G

Le présent rapport a été établi pour toutes les revendications

| Lieu de la recherche | Date d'achèvement de la recherche | Examinateur |
|---|---|---|
| LA HAYE | 07-07-1988 | VILBIG K |